# DEMANDE DE BREVET EUROPEEN

(11) **EP 0 838 706 A1**
(43) Date de publication de la demande: **29.04.1998**
(21) Numéro de dépôt: 97402509.0
(22) Date de dépôt: 23.10.1997
(51) Int. Cl.: G02B 6/44

(54) **Câble optique avec une pile flexible de rubans de fibres optiques**

(30) Priorité: 28.10.1996 FR 9613120
(71) Demandeur: ALCATEL ALSTHOM COMPAGNIE GENERALE D'ELECTRICITE, 75008 Paris (FR)
(72) Inventeur: Benzel, David, 62100 Calais (FR)
(74) Mandataire: Buffière, Michelle

(57) **Abrégé**

Le câble de transmission optique comprend une gaine (2) dans laquelle sont insérés des rubans de fibres optiques (1A,1B,1C), ces rubans de fibres optiques étant disposés parallèlement les uns sur les autres pour former une pile de rubans. Chaque ruban est plié en deux suivant une ligne médiane longitudinale (C). La pile de rubans pliés en deux présente une section transversale essentiellement en forme de V apte à se déformer élastiquement par variation de l'angle (a) entre les branches du V, ce qui permet au câble de résister à l'écrasement sans endommagement des fibres optiques.

## Description

L'invention concerne les câbles de transmission optique comprenant une gaine à l'intérieur de laquelle sont insérés des rubans de fibres disposés les uns sur les autres pour former une pile de rubans.

De tels câbles doivent pouvoir résister à certaines forces de contrainte externes exercées sensiblement radialement par rapport à l'axe longitudinal du câble. Ces forces de contrainte externes conduisent à l'écrasement de la gaine du câble ce qui tend à compacter les rubans de fibres optiques et, par voie de conséquence, à modifier les propriétés de transmission optique des fibres optiques, notamment en augmentant leur atténuation ce qui n'est pas désirable.

Pour augmenter la résistance à l'écrasement des câbles de transmission optique à rubans, on a déjà pensé à loger ces rubans de fibres optiques dans une structure préfabriquée et relativement rigide à plusieurs fentes, chaque ruban étant logé dans une fente de la structure. Une telle solution augmente toutefois le coût de fabrication des câbles. Par ailleurs, cette structure préfabriquée a tendance à rigidifier le câble ce qui engendre des problèmes pour la pose du câble.

Selon une autre solution connue, on prévoit une gaine de câble assez rigide et d'un diamètre relativement grand pour laisser à l'intérieur de la gaine un espace libre suffisant autour des rubans. De la sorte, si la gaine est déformée par écrasement, les rubans peuvent se tasser dans cet espace laissé libre dans la gaine. Cette solution n'est toutefois pas satisfaisante car elle va à l'encontre d'un besoin de réduction de la section des câbles de transmission optique.

Le but de l'invention est de proposer un câble de transmission optique à rubans de fibres optiques qui résiste bien à l'écrasement, qui soit bon marché à fabriquer tout en ayant une section réduite.

A cet effet, l'invention a pour objet un câble de transmission optique comprenant une gaine et des rubans de fibres optiques disposés les uns sur les autres pour former une pile de rubans à l'intérieur de ladite gaine, caractérisé en ce que chaque ruban est plié en deux suivant une ligne médiane longitudinale du ruban et en ce que la pile de rubans pliés en deux présente une section transversale essentiellement en forme de V apte à se déformer élastiquement par variation de l'angle entre les branches du V sous l'effet d'une défortmation possible de ladite gaine, celle-ci étant prévue de section réduite adaptée pour loger ladite pile de rubans pliés en deux et étant relativement souple et déformable.

Ainsi, c'est la variation élastique de cet angle qui permet d'obtenir une bonne résistance du câble à l'écrasement, ceci sans structure rigide prévue autour de la pile de rubans.

Un exemple de réalisation d'un câble selon l'invention est décrit ci-après en référence aux dessins.

La figure 1 montre très schématiquement un exemple de réalisation d'un ruban de fibres optiques adapté pour la fabrication d'un câble optique selon l'invention.

La figure 2 montre très schématiquement un autre exemple de réalisation d'un ruban de fibres optiques adapté pour la fabrication d'un câble optique selon l'invention.

La figure 3 montre très schématiquement en section, un empilement de rubans de fibres optiques pliés en deux dans une gaine de câble optique selon l'invention.

La figure 4 illustre la déformation du câble de la figure 3 sous l'action d'un premier type de forces de contrainte.

La figure 5 illustre la déformation du câble de la figure 3 sous l'action d'un second type de forces de contrainte.

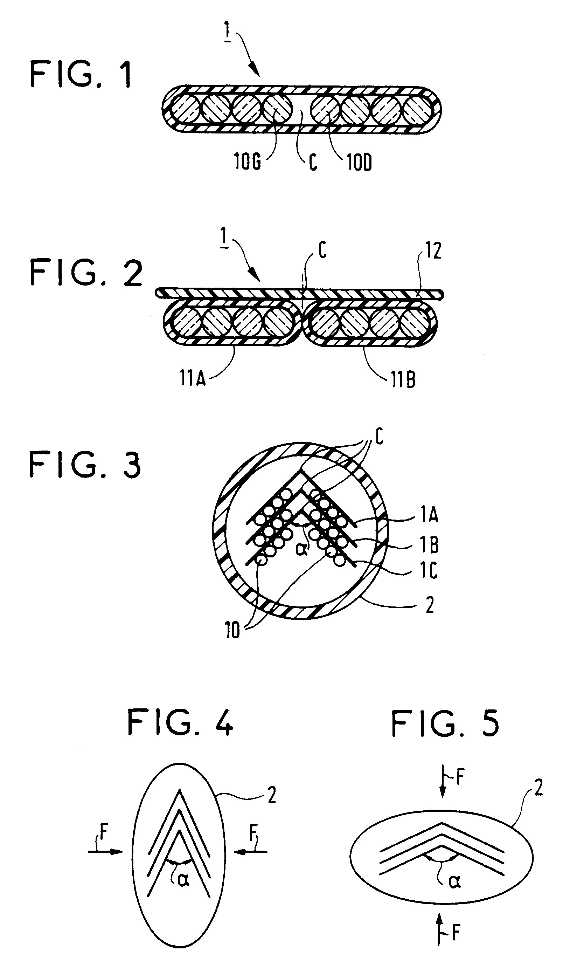

Figure 1, un ruban de fibres optiques 1 montré en coupe transversale pour un câble optique résistant à l'écrasement selon l'invention doit pourvoir plier en deux de façon élastique suivant une ligne de pliage C correspondant sensiblement à la médiane longitudinale du ruban. Dans l'exemple de la figure 1, ceci est rendu possible par un certain écartement entre les deux fibres optiques 10G et 10D situées de part et d'autre de la ligne C. Il est entendu que le degré d'élasticité du pliage est ici obtenu par le choix du matériau isolant dans lequel sont noyées classiquement les fibres optiques.

Figure 2, le ruban 1 montré encore en coupe transversale est ici constitué par une paire de plus petits rubans 11A et 11B juxtaposés sur une plaque flexible 12 en matière synthétique ou analogue apte à plier de façon élastique. Sur cette figure, on voit que les petits rubans sont écartés l'un de l'autre pour permettre le pliage de la plaque 12 suivant la ligne C qui correspond à la médiane longitudinale de la plaque.

Les figures 1 et 2 montrent une configuration de rubans à 8 fibres optiques, mais l'invention s'étend à toute configuration analogue avec un nombre différents de fibres formées dans un ruban.

Figure 3, plusieurs rubans 1A,1B,1C sont disposés les uns sur les autres dans une gaine 2 de câble optique pour former une pile ayant en section transversale essentiellement la forme d'un V. Si les rubans sont du type de celui de la figure 2, il est préférable que la plaque 12 de chaque ruban soit orientée du côté de la gaine 2 pour obtenir une meilleure protection des fibres optiques lors de l'écrasement de la gaine 2. Plus particulièrement, on voit sur cette figure que les fibres optiques 10 du ruban 1C sont disposées à l'intérieur des branches du V. Il est entendu que l'invention s'étend aussi à une configuration selon laquelle les fibres optiques sont orientées du côté extérieur du V.

Figures 4 et 5, quand une force de contrainte F est exercée sur la gaine 2 (écrasement horizontal sur la figure 4, écrasement vertical sur la figure 5), les branches du V de la pile de rubans se rapprochent élastiquement l'une de l'autre ou s'écartent élastiquement l'une de l'autre. Ainsi, la variation élastique de l'angle α entre les branches du V permet d'éviter un tassement des fibres optiques en cas d'écrasement de la gaine. On n'a donc pas besoin d'une structure rigide supplémentaire pour protéger les fibres optiques. En même temps, on préserve une section réduite de gaine pour loger les rubans pliés en deux.

## Revendications

1. Câble de transmission optique comprenant une gaine (2) et des rubans de fibres optiques (1,1A,1B,1C), disposés les uns sur les autres pour former une pile de rubans à l'intérieur de ladite gaine, caractérisé en ce que chaque ruban est plié en deux suivant une ligne médiane longitudinale (C) du ruban et en ce que la pile de rubans pliés en deux présente une section transversale essentiellement en forme de V apte à se déformer élastiquement par variation de l'angle (α) entre les branches du V sous l'effet d'une déformation possible de ladite gaine, celle-ci étant prévue de section réduite adaptée pour loger ladite pile de rubans pliés en deux et étant relativement souple et déformable.

2. Câble selon la revendication 1, dans lequel chaque ruban de fibres optiques comprend une paire de plus petits rubans (11A, 11B) juxtaposés non jointivement sur une plaque flexible (12) apte à se plier élastiquement suivant ladite ligne longitudinale (C) entre les deux petits rubans sur ladite plaque.

3. Câble selon la revendication 2, dans lequel les plaques flexibles (12) des rubans sont toutes disposées d'un même côté sur lesdits rubans.

4. Câble selon la revendication 1, dans lequel chaque ruban de fibres optiques présente un jeu entre les deux fibres optiques (10G), 10D) situées de part et d'autre de ladite ligne médiane (C).
